# EUROPEAN PATENT APPLICATION

(11) **EP 4 773 354 A1**
(43) Date of publication of application: **08.07.2026**
(21) Application number: 24892724.6
(22) Date of filing: 28.05.2024
(51) Int. Cl.: H01M 50/103, H01M 50/133

(54) **BATTERY AND ELECTRIC DEVICE**

(30) Priority: 20.11.2023 CN 202323136222 U
(71) Applicant: Contemporary Amperex Technology Co., Limited, Ningde, Fujian 352100 (CN)
(72) Inventor: ZHOU, Wenlin, Ningde, Fujian 352100 (CN); YANG, Kaihuan, Ningde, Fujian 352100 (CN); CHENG, Qi, Ningde, Fujian 352100 (CN); XIE, Yongfeng, Ningde, Fujian 352100 (CN); LI, Quankun, Ningde, Fujian 352100 (CN)
(74) Representative: Ziebig Hengelhaupt Intellectual Property Attorneys Patentanwaltskanzlei PartGmbB
(86) International application number: PCT/CN2024/095769
(87) International publication number: WO 2025/107559

(57) **Abstract**

A battery (100) and an electric device. The battery (100) comprises battery cells (10) and a separation component (30). Each battery cell (10) has a casing (11). In a first direction (x), the separation component (30) is arranged on one side of a battery cell (10), and the separation component (30) is used for separating the battery cell (10) from another component adjacent to the battery cell (10). In the first direction (x), the casing (11) has a first wall (12) facing the separation component (30). The first wall (12) has a first body portion (120) and a first thickened portion (121) arranged in a second direction (z), wherein the thickness of the first thickened portion (121) is greater than the thickness of the first body portion (120), and the first direction (x) and the second direction (z) are perpendicular to each other. In the second direction (z), the first thickened portion is located on one side of the separation component (30); and in the first direction (x), the first thickened portion (121) protrudes towards the separation component (30) relative to the first body portion (120) and is used for limiting the displacement of the separation component (30) in the second direction (z). Thus, the reliability of the battery can be improved.

## Description

### CROSS-REFERENCE TO RELATED APPLICATIONS

The present application claims priority to Chinese Patent Application No. 202323136222.X, filed on November 20, 2023 and entitled "BATTERY AND ELECTRIC APPARATUS", which is incorporated herein by reference in its entirety.

### TECHNICAL FIELD

The present application relates to the technical field of batteries, and in particular, to a battery and an electric apparatus.

### BACKGROUND

Energy conservation and emission reduction are crucial to the sustainable development of the automobile industry. Electric vehicles, with their advantages in energy conservation and emission reduction, have become an important part of the sustainable development of the automobile industry. For electric vehicles, battery technologies are an important factor related to the development of the electric vehicles.

In the development of battery technology, how to improve the reliability of a battery is an urgent technical problem that needs to be solved in the battery technology.

### SUMMARY

The present application provides a battery and an electric apparatus, and the technical solution provided by the present application can improve the reliability of the battery.

The present application is implemented through the following technical solutions:

According to a first aspect, the present application provides a battery, the battery including a battery cell and a separation member. The battery cell has a housing. Along a first direction, the separation member is provided on one side of the battery cell, and the separation member is configured to separate the battery cell from other components adjacent to the battery cell. Along the first direction, the housing has a first wall facing the separation member. The first wall has a first body portion and a first thickened portion arranged along a second direction, a thickness of the first thickened portion is greater than a thickness of the first body portion, and the first direction and the second direction are perpendicular to each other. Along the second direction, the first thickened portion is located on one side of the separation member, and along the first direction, the first thickened portion protrudes toward the separation member relative to the first body portion and is configured to restrict the displacement of the separation member along the second direction.

In the above solution, by providing a thicker and outwardly protruding first thickened portion on the first wall of the housing, on one hand, the strength of the first wall can be enhanced, mitigating the problem of cracking of the first wall due to impact on an unconstrained portion by the separation member. On the other hand, the outwardly protruding first thickened portion can limit the position of the separation member, and restrict the displacement of the separation member along the second direction, thereby ensuring the separation member to be in the correct position. This reduces the risk of failure of the separation member, resulting in the battery with higher reliability.

According to some embodiments of the present application, along a third direction, the first wall has a first side edge and a second side edge opposite each other, and the third direction, the second direction, and the first direction are perpendicular to each other. Along the third direction, the first thickened portion extends from the first side edge to the second side edge; or along the third direction, the first thickened portion is located between the first side edge and the second side edge.

In the above solution, in some embodiments, by setting the first thickened portion to extend from the first side edge to the second side edge, the strength of the first wall can be effectively enhanced, reducing the risk of cracking of the first wall due to impact. In some other embodiments, by setting the first thickened portion to be located between the first side edge and the second side edge, the influence of the first thickened portion on the weight of the first wall is reduced under the condition that the first wall has higher strength, thereby allowing the battery to have a higher gravimetric energy density.

According to some embodiments of the present application, along the second direction, the housing has a first end wall, and the first body portion is farther from the first end wall than the first thickened portion. A maximum thickness of the first thickened portion is W1, and a maximum thickness of the first end wall is W2, W1 and W2 satisfying W1 ≤ W2.

In the above solution, by limiting the maximum thickness W1 of the first thickened portion to not greater than the maximum thickness W2 of the first end wall, the influence of the first thickened portion on the weight of the battery cell is smaller under the condition of improving the strength of the first wall, thereby allowing the battery to have a higher gravimetric energy density.

According to some embodiments of the present application, the separation member is located between two adjacent battery cells, and along the first direction, a maximum dimension by which the first thickened portion protrudes from the first body portion is E, and a maximum thickness of the separation member is W3, E and W3 satisfying 2*E < W3.

In the above solution, the separation member is located between the first walls of two battery cells, and by limiting the maximum dimension E by which the first thickened portion protrudes from the first body portion to satisfy 2*E < W3, interference between the two first thickened portions can be prevented, reducing the risk of damage to the housing due to mutual interference between the two first thickened portions, resulting in the battery with higher reliability.

According to some embodiments of the present application, along a direction from the first body portion toward the first thickened portion, the thickness of the first thickened portion gradually increases.

In the above solution, by setting the thickness of the first thickened portion to gradually increase, the forming of the first thickened portion is facilitated, the difficulty in forming the first thickened portion is reduced, and the manufacturing efficiency of the battery is improved.

According to some embodiments of the present application, along the second direction, the first wall further has a second thickened portion, the second thickened portion is located on a side of the first body portion facing away from the first thickened portion, and a thickness of the second thickened portion is greater than the thickness of the first body portion.

In the above solution, by providing the second thickened portion on the side of the first body portion facing away from the first thickened portion, the overall strength of the first wall can be effectively enhanced. This enhances the impact resistance of the first wall, effectively reducing the risk of cracking of the housing due to impact, resulting in the battery with higher reliability.

According to some embodiments of the present application, along the third direction, the first wall has the first side edge and the second side edge opposite each other, and the third direction, the second direction, and the first direction are perpendicular to each other. Along the third direction, the second thickened portion extends from the first side edge to the second side edge; or along the third direction, the second thickened portion is located between the first side edge and the second side edge.

In the above solution, in some embodiments, by setting the second thickened portion to extend from the first side edge to the second side edge, the strength of the first wall can be effectively enhanced, reducing the risk of cracking of the first wall due to impact. In some other embodiments, by setting the second thickened portion to be located between the first side edge and the second side edge, the influence of the second thickened portion on the weight of the first wall is reduced under the condition of enhancing the strength of the first wall, thereby allowing the battery to have a higher gravimetric energy density.

According to some embodiments of the present application, along a direction from the first body portion toward the second thickened portion, the thickness of the second thickened portion gradually increases.

In the above solution, by setting the thickness of the second thickened portion to gradually increase, the forming of the second thickened portion is facilitated, the difficulty in forming the second thickened portion is reduced, and the manufacturing efficiency of the battery is improved.

According to some embodiments of the present application, the housing includes an end cover and a housing body, and the housing body has the first wall. Along the second direction, the housing body has an opening, the first body portion is farther from the opening than the second thickened portion, and the end cover is welded to the first wall and seals the opening.

In the above solution, the opening of the housing body is sealed by the end cover, enabling the electrode assembly and electrolyte of the battery to be in an enclosed space, reducing the influence of external substances, resulting in the battery with higher reliability. To improve the manufacturing efficiency of the battery, the end cover can be connected to the housing by welding. However, after the end cover and the housing body are welded, a heat-affected zone that reduces the strength of the housing body is often formed below the weld pool. To this end, by providing the second thickened portion to compensate for the strength of the heat-affected zone, ensuring higher strength of the housing body and the end cover after welding, reducing or mitigating the risk of cracking and failure at the welding position of the end cover and the housing body, thereby improving the reliability of the battery.

According to some embodiments of the present application, a maximum thickness of the second thickened portion is w1, and a thickness of the end cover is w2, w1 and w2 satisfying w1 ≤ w2.

In the above solution, by limiting the maximum thickness w1 of the second thickened portion to not greater than the maximum thickness w2 of the end cover, the influence of the second thickened portion on the weight of the battery cell is smaller under the condition of improving the strength of the first wall, thereby allowing the battery to have a higher gravimetric energy density.

According to some embodiments of the present application, along the third direction, the housing further has a second wall, the second wall is adjacent to the first wall, an area of a surface of the first wall is greater than an area of a surface of the second wall, and the third direction, the second direction, and the first direction are perpendicular to each other. The second wall has a second body portion and a third thickened portion arranged along the second direction, and the second body portion is farther from the opening than the third thickened portion.

In the above solution, by providing the third thickened portion on the second wall at a portion corresponding to the opening of the housing body, the third thickened portion cooperates with the second thickened portion to enhance the strength of the housing body, and reduce the risk of cracking of the housing body due to impact, thereby improving the reliability of the battery.

According to some embodiments of the present application, the housing body includes two first walls opposite each other along the first direction, and two second walls opposite each other along the third direction, and the first wall and the second wall are connected to each other and jointly enclose an opening. Along a circumferential direction of the housing body, the second thickened portion and the third thickened portion are connected to each other.

In the above solution, by setting a thickened region around the entire perimeter of the housing body corresponding to the opening, the strength of the housing body can be effectively enhanced, reducing the risk of cracking of the housing body, thereby improving the reliability of the battery.

According to some embodiments of the present application, along the first direction, the second thickened portion protrudes toward the separation member relative to the first body portion, the first thickened portion, the first body portion, and the second thickened portion jointly form a limiting groove, and the separation member is located in the limiting groove.

In the above solution, by setting the second thickened portion to protrude toward the separation member relative to the first body portion, on one hand, the strength of the first wall can be enhanced, mitigating the problem of cracking due to impact on an unconstrained portion by the separation member. On the other hand, a limiting function is achieved, allowing the second thickened portion and the first thickened portion to jointly form a limiting groove, restricting the displacement of the separation member along the second direction, thereby ensuring the separation member to be in the correct position. This reduces the risk of failure of the separation member, resulting in the battery with higher reliability.

According to some embodiments of the present application, the separation member is located between two adjacent battery cells, and along the first direction, a maximum dimension by which the second thickened portion protrudes from the first body portion is e, and a maximum thickness of the separation member is W3, e and W3 satisfying 2*e < W3.

In the above solution, the separation member having a maximum thickness of W3 is located between the first walls of two battery cells, and by limiting the maximum dimension e by which the second thickened portion protrudes from the first body portion to satisfy 2*e < W3, interference between the two second thickened portions can be prevented, reducing the risk of damage to the first wall due to mutual interference between the two second thickened portions, resulting in the battery with higher reliability.

According to some embodiments of the present application, the housing includes a cover and a housing body, and the first wall is at least part of the cover; and the housing body is formed with an opening, and the cover is connected to the housing body and seals the opening.

In the above solution, a design of a housing is provided, the housing may include a cover and a housing body, and the connection of the cover and the housing body enables the electrode assembly to be provided in an enclosed space, and at the same time, by providing the first thickened portion on the cover, the strength of the cover can be enhanced and the displacement of the separation member can be restricted, resulting in the battery with higher reliability.

According to some embodiments of the present application, the separation member includes a thermal management component configured to regulate the temperature of the battery cell.

In the above solution, the separation member may include a thermal management component, and while separating the battery cells, the thermal management component can also facilitate heat exchange with the battery cell through the thermal management component or a medium inside the thermal management component, so that the battery is at a suitable temperature, thereby allowing the battery to have better performance.

According to a second aspect, some embodiments of the present application provide an electric apparatus, including the battery according to any one of the first aspect, where the battery is configured to supply electrical energy.

Additional aspects and advantages of the present application will be given in part in the following description, part of which will become apparent from the following description or be learned from the practice of the embodiments of the present application.

### BRIEF DESCRIPTION OF DRAWINGS

To describe the technical solutions in embodiments of the present application more clearly, the following briefly describes the accompanying drawings required for describing some embodiments. It is appreciated that the accompanying drawings below show merely some embodiments of the present application and thus should not be considered as limitations on the scope. Persons of ordinary skill in the art may still derive other related drawings from the accompanying drawings without creative efforts.
FIG. 1 is a schematic diagram of a vehicle according to some embodiments of the present application;
FIG. 2 is a three-dimensional exploded view of a battery according to some embodiments of the present application;
FIG. 3 is a schematic diagram of a battery cell and a separation member according to some embodiments of the present application;
FIG. 4 is a schematic diagram of an internal structure of a battery cell and a separation member according to some embodiments of the present application;
FIG. 5 is an enlarged view of portion A in FIG. 4;
FIG. 6 is a schematic diagram of a battery cell according to some embodiments of the present application;
FIG. 7 is an enlarged view of portion B in FIG. 4; and
FIG. 8 is a schematic diagram of a battery cell according to some other embodiments of the present application.

Reference numerals: 100-battery; 10-battery cell; 11-housing; 110-end cover; 111-housing body; 12-first wall; 120-first body portion; 121-first thickened portion; 122-second thickened portion; 123-first side edge; 124-second side edge; 13-second wall; 130-third thickened portion; 14-first end wall; 15-limiting groove; 16-electrode assembly; 17-electrode terminal; 20-box body; 21-first box body portion; 22-second box body portion; 30-separation member; x-first direction; z-second direction; y-third direction; 1000-vehicle; 200-controller; and 300-motor.

### DESCRIPTION OF EMBODIMENTS

The following describes in detail embodiments of technical solutions of the present application with reference to the accompanying drawings. The following embodiments are merely intended for a clearer description of the technical solutions of the present application and therefore are merely used as examples which do not constitute any limitation on the protection scope of the present application.

Unless otherwise defined, all technical and scientific terms used herein shall have the same meanings as commonly understood by persons skilled in the art to which the present application relates. The terms used herein are intended to merely describe the specific embodiments rather than to limit the present application. The terms "include", "comprise", and "have" and any other variations thereof in the specification, claims and brief description of drawings of the present application are intended to cover non-exclusive inclusions.

In the description of the embodiments of the present application, the technical terms "first", "second", and the like are merely intended to distinguish between different objects, and shall not be understood as any indication or implication of relative importance or any implicit indication of the number, specific sequence, or primary-secondary relationship of the technical features indicated.

In this specification, reference to "embodiment" means that specific features, structures, or characteristics described with reference to the embodiment may be included in at least one embodiment of the present application. The word "embodiment" appearing in various positions in the specification does not necessarily refer to the same embodiment or an independent or alternative embodiment that is exclusive of other embodiments. It is explicitly or implicitly understood by persons skilled in the art the embodiments described herein may be combined with other embodiments.

In the description of the embodiments of the present application, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

In the description of the embodiments of the present application, the term "multiple" means more than two (inclusive). Similarly, "multiple groups" means more than two (inclusive) groups, and "multiple pieces" means more than two (inclusive) pieces.

In the description of the embodiments of the present application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skill in the art can understand specific meanings of these terms in the embodiments of the present application as suitable to specific situations.

In the present application, the battery cell may be a lithium-ion secondary battery, a lithium-ion primary battery, a lithium-sulfur battery, a sodium-lithium-ion battery, a sodium-ion battery, a magnesium-ion battery, or the like. This is not limited in the embodiments of the present application. The battery cell may be cuboid or of other shapes. This is not limited in the embodiments of the present application either. The battery mentioned in the embodiments of the present application is a single physical module that includes one or more battery cells for providing higher voltage and capacity. The battery generally includes a box body configured to enclose one or more battery cells. The box body can prevent a liquid or another foreign matter from affecting charging or discharging of the battery cell.

The battery cell includes an electrode assembly and an electrolyte, and the electrode assembly is composed of a positive electrode plate, a negative electrode plate, and a separator. The battery cell works mainly depending on migration (for example, intercalation and deintercalation) of metal ions between the positive electrode plate and the negative electrode plate. The positive electrode plate includes a positive electrode current collector and a positive electrode active substance layer. A surface of the positive electrode current collector is coated with the positive electrode active substance layer. A positive electrode current collector uncoated with the positive electrode active substance layer protrudes out of a positive electrode current collector coated with the positive electrode active substance layer, and the positive electrode current collector uncoated with the positive electrode active substance layer serves as a positive electrode tab. A lithium-ion battery is used as an example, in which a positive electrode current collector may be made of aluminum, and the positive electrode active material may be lithium cobaltate, lithium iron phosphate, ternary lithium, or lithium manganate oxide. The negative electrode plate includes a negative electrode current collector and a negative electrode active substance layer. A surface of the negative electrode current collector is coated with the negative electrode active substance layer. A negative electrode current collector uncoated with the negative electrode active substance layer protrudes out of a negative electrode current collector coated with the negative electrode active substance layer, and the negative electrode current collector uncoated with the negative electrode active substance layer serves as a negative electrode tab. The negative electrode current collector may be made of copper, and the negative electrode active substance may be made of carbon, or silicon. In order to guarantee that no fusing occurs when a large current passes, there are multiple positive electrode tabs that are stacked together, and there are multiple negative electrode tabs that are stacked together. The separator may be made of PP (polypropylene, polypropylene), PE (polyethylene, polyethylene), or the like. In addition, the electrode assembly may be a wound structure or a laminated structure. However, the embodiments of the present application are not limited thereto.

For the development of battery technologies, many design factors need to be considered, for example, performance parameters such as energy density, cycle life, discharge capacity, and charge and discharge rate, as well as the reliability of the battery. For the battery, the battery generally includes a battery cell and a separation member. The separation member is located on a side of the battery cell and is configured to separate the battery cell from other components adjacent to the battery cell. For example, the separation member may be a thermal management component, and the thermal management component is disposed between two adjacent battery cells for separation and thermal management.

However, with charging and discharging, the swelling force inside the battery acts on the separation member, so that when the separation member is impacted or the separation member is subjected to external impact, the separation member is displaced along a surface of the battery cell, or even cause the separation member to detach from the battery cell, resulting in failure of the separation member, for example, unable to achieve separation and thermal management functions, thereby causing low reliability of the battery.

In view of this, to improve the problem of displacement of the separation member due to impact, some embodiments of the present application provide a battery, the battery including a battery cell and a separation member. The battery cell has a housing. Along a first direction, the separation member is provided on one side of the battery cell, and the separation member is configured to separate the battery cell from other components adjacent to the battery cell. Along the first direction, the housing has a first wall facing the separation member. The first wall has a first body portion and a first thickened portion arranged along a second direction, a thickness of the first thickened portion is greater than a thickness of the first body portion, and the first direction and the second direction are perpendicular to each other. Along the second direction, the first thickened portion is located on one side of the separation member, and along the first direction, the first thickened portion protrudes toward the separation member relative to the first body portion and is configured to restrict the displacement of the separation member along the second direction.

In the above solution, by providing a thicker and outwardly protruding first thickened portion on the first wall of the housing, on one hand, the strength of the first wall can be enhanced, mitigating the problem of cracking of the first wall due to impact on an unconstrained portion by the separation member. On the other hand, the outwardly protruding first thickened portion can limit the position of the separation member, restrict the displacement of the separation member along the second direction, thereby ensuring the separation member to be in the correct position. This reduces the risk of failure of the separation member, resulting in the battery with higher reliability.

The technical solution described in the embodiments of the present application is applicable to a battery and an electric apparatus using the battery.

The electric apparatus may be a vehicle, a mobile phone, a portable device, a notebook computer, a ship, a spacecraft, an electric toy, an electric tool, or the like. The vehicle may be a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The foregoing electric apparatus is not particularly limited in the embodiments of the present application.

For ease of description, the following embodiments are described using the electric apparatus being a vehicle 1000 as an example.

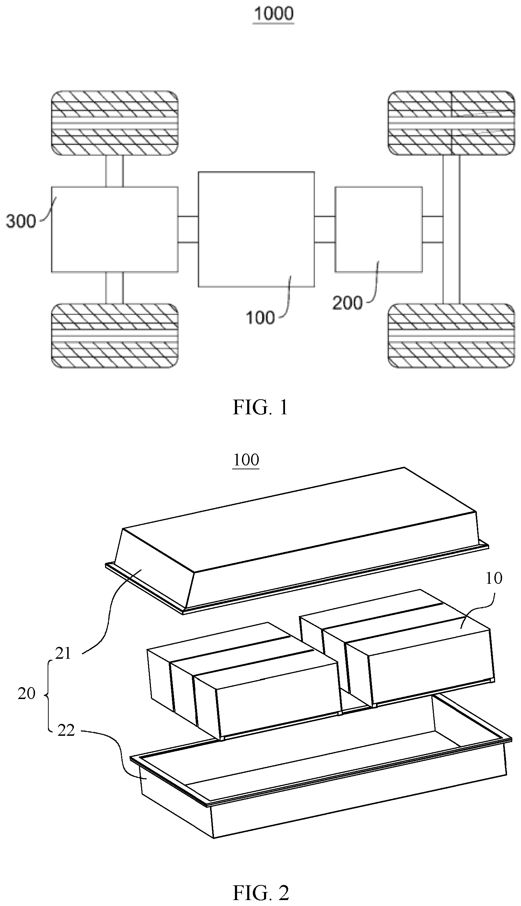

FIG. 1 is a schematic diagram of a vehicle 1000 according to some embodiments of the present application.

A controller 200, a motor 300, and a battery 100 may be provided in the vehicle 1000, where the controller 200 is configured to control the battery 100 to supply power to the motor 300. For example, the battery 100 may be disposed at the bottom, the front, or the rear of the vehicle 1000. The battery 100 may be configured to supply power to the vehicle 1000. For example, the battery 100 may be used as an operational power source for the vehicle 1000 which is configured for a circuit system of the vehicle 1000, for example, to satisfy power needs of start, navigation, and running of the vehicle 1000. In another embodiment of the present application, the battery 100 can be used as not only the operational power source for the vehicle 1000 but also a driving power source for the vehicle 1000, replacing or partially replacing fossil fuel or natural gas to provide driving traction for the vehicle 1000.

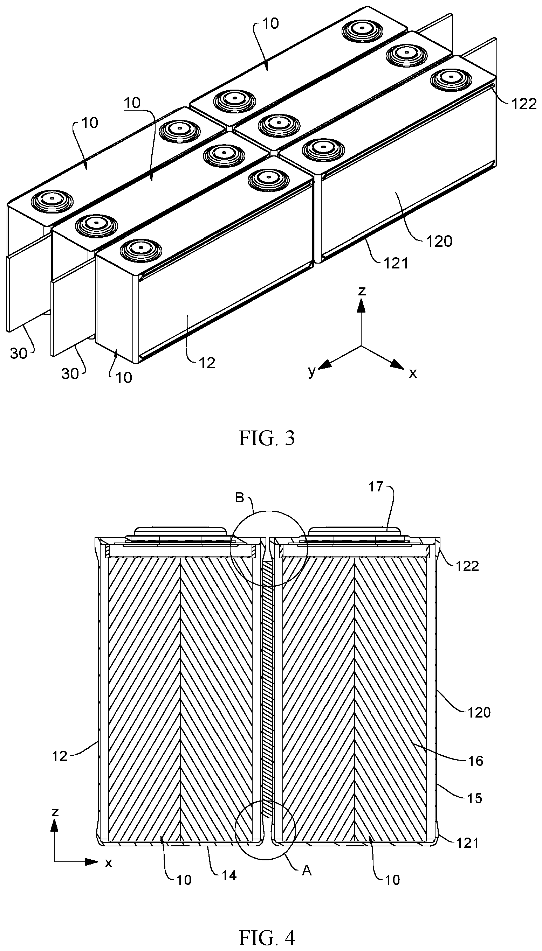

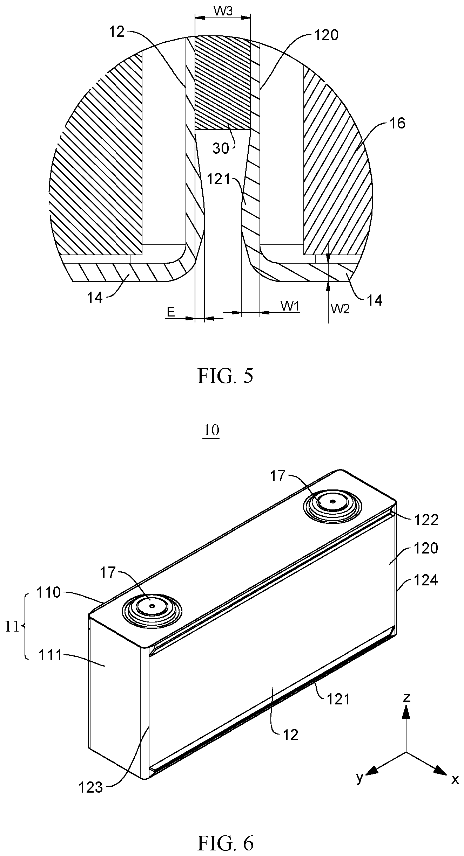

Referring to FIG. 2 to FIG. 5. FIG. 2 is a three-dimensional exploded view of a battery 100 according to some embodiments of the present application, FIG. 3 is a schematic diagram of a battery cell 10 and a separation member 30 according to some embodiments of the present application, FIG. 4 is a schematic diagram of an internal structure of a battery cell 10 and a separation member 30 according to some embodiments of the present application, and FIG. 5 is an enlarged view of portion A in FIG. 4.

The battery 100 includes a battery cell 10 and a separation member 30. The battery cell 10 has a housing 11. Along a first direction x, the separation member 30 is provided on one side of the battery cell 10, and the separation member 30 is configured to separate the battery cell 10 from other components adjacent to the battery cell 10. Along the first direction x, the housing 11 has a first wall 12 facing the separation member 30. The first wall 12 has a first body portion 120 and a first thickened portion 121 arranged along a second direction z, a thickness of the first thickened portion 121 is greater than a thickness of the first body portion 120, and the first direction x and the second direction z are perpendicular to each other. Along the second direction z, the first thickened portion 121 is located on one side of the separation member 30, and along the first direction x, the first thickened portion 121 protrudes toward the separation member 30 relative to the first body portion 120 and is configured to restrict the displacement of the separation member 30 along the second direction z.

In some embodiments, with reference to FIG. 2, the battery 100 includes a battery cell 10 and a box body 20, and the battery cell 10 is accommodated in the box body 20. The box body 20 is configured to provide an accommodating space for the battery cell 10. The box body 20 may be a variety of structures. In some embodiments, the box body 20 may include a first box body portion 21 and a second box body portion 22, the first box body portion 21 and the second box body portion 22 fit together. The first box body portion 21 and the second box body portion 22 jointly define an accommodating space for accommodating the battery cell 10. The second box body portion 22 may be a hollow structure with an opening at one end, the first box body portion 21 may be a plate-shaped structure, and the first box body portion 21 covers the opening side of the second box body portion 22 so that the first box body portion 21 and the second box body portion 22 jointly define the accommodating space. Alternatively, both the first box body portion 21 and the second box body portion 22 may be hollow structures with an opening at one side, and the opening side of the first box body portion 21 is engaged with the opening side of the second box body portion 22. Certainly, the box body 20 formed by the first box body portion 21 and the second box body portion 22 may be of various shapes, for example, a cylinder and a cuboid.

In the battery 100, one or more battery cells 10 may be provided, and each battery cell 10 may be fixed to the box body 20 through a connection member (for example, a bolt), or each battery cell 10 may be fixed to the box body 20 by adhesion.

In some embodiments, the first direction x may be parallel to a thickness direction of the battery cell 10. In some other embodiments, the first direction x may be parallel to a width direction of the battery cell 10. The width direction, thickness direction, and height direction of the battery cell 10 are parallel to each other.

The separation member 30 is a member provided on a side of the battery cell 10 in the first direction x. In the first direction x, the separation member 30 may be between the battery cell 10 and other components adjacent to the battery cell 10. For example, the separation member 30 may be between the battery cell 10 and the battery cell 10, that is, "other components" may be another battery cell 10; or, the separation member 30 may be between the battery cell 10 and a wall portion of the box body 20, that is, "other components" may be a wall portion of the box body 20 of the battery 100; or the separation member 30 may be between the battery cell 10 and an end plate, where the end plate may be a partial structure of a battery module, the battery module may include a plurality of battery cells 10 and an end plate, and the end plate is located at an end plate of the plurality of battery cells 10 and has a function of fastening the plurality of battery cells 10.

In some embodiments, the separation member 30 has a separation function, thereby allowing the battery cell 10 to have a more reliable environment, reducing the influence of other components adjacent to the battery cell 10 on the battery cell 10. For example, the separation member 30 has insulating properties, so that the battery cell 10 and other components adjacent thereto are insulated from each other. In some embodiments, the separation member 30 may be a thermal management component, which may be located on a side of the battery cell 10 and perform heat exchange with the battery cell 10 to regulate the temperature of the battery cell 10. For example, the separation member 30 may be a water-cooling plate provided on a side of the battery cell 10.

For example, referring to FIG. 3, the separation member 30 is a plate-like thermal management component having a cavity inside to accommodate a medium, and the temperature of the battery cell 10 is regulated through the medium. In the second direction z, a dimension of the separation member 30 is less than a dimension of the battery cell 10, and the separation member 30 may be between two opposite ends of the battery cell 10 in the second direction z. The second direction z is perpendicular to the first direction x, and the second direction z may be a height direction of the battery 100. In some embodiments, the second direction z may be parallel to a gravity direction.

The battery cell 10 includes a housing 11, and an electrode assembly 16 and an electrolyte of the battery cell 10 may be disposed in the housing 11. In some embodiments, the housing 11 may include a housing body 111 and an end cover 110, the housing body 111 has an opening, the electrode assembly 16 is disposed inside the housing body 111, and the end cover 110 is connected to the housing body 111 to seal the opening, so that the electrode assembly 16 is located in an enclosed space. In some embodiments, the end cover 110 may be provided with an electrode terminal 17, and the electrode terminal 17 is connected to a tab of the electrode assembly 16 to achieve current output and input. In some embodiments, the end cover 110 may be provided with a liquid injection hole, and the electrolyte may be injected into the housing body 111 through the liquid injection hole. In some embodiments, the end cover 110 may be riveted, welded, or threadedly connected to the housing body 111.

The first wall 12 is a wall portion of the housing 11 in the first direction x, and the first wall 12 is a wall portion facing the separation member 30. In some embodiments, the first wall 12 is a part of a peripheral wall of the housing body 111. In some embodiments, the housing body 111 is square, and its peripheral wall is enclosed by four side walls, the four side walls include two side walls with larger areas and two side walls with smaller areas, and the first wall 12 may be a side wall with a larger area. In some other embodiments, the first wall 12 may also be a side wall with a smaller area of the peripheral wall.

Along the second direction z, the first wall 12 has a first body portion 120 and a first thickened portion 121 that are arranged with each other, the first body portion 120 is a part of the first wall 12, the first thickened portion 121 is a part of the first wall 12, and the thickness of the first body portion 120 is less than the thickness of the first thickened portion 121.

"Along the second direction z, the first thickened portion 121 is located on one side of the separation member 30" may be understood as that along the first direction x, a projection of the separation member 30 on the first wall 12 does not overlap with the first thickened portion 121. Referring to FIG. 5, the second direction z may be parallel to the gravity direction, and the first thickened portion 121 may be below the separation member 30.

In some embodiments, along the first direction x, the projection of the separation member 30 on the first wall 12 may overlap with the first body portion 120, that is, the first body portion 120 may come into contact with the separation member 30.

"Along the first direction x, the first thickened portion 121 protrudes toward the separation member 30 relative to the first body portion 120" may be understood as that the first thickened portion 121 may protrude from an outer surface of the first body portion 120. When the separation member 30 is in a state of contacting the first body portion 120 and the separation member 30 has a tendency to displace along the second direction z due to an external force, the first thickened portion 121 may provide support for the separation member 30 due to its outward protrusion, thereby restricting the displacement of the separation member 30. In some embodiments, the separation member 30 may be connected to the first wall 12, for example, adhered to the first body portion 120. When the battery 100 is impacted, the separation member 30 has a tendency to displace due to the impact, and through the support of the first thickened portion 121, the position of the separation member 30 may be restricted.

In some embodiments, compared to the first body portion 120, the portion where the thickness of the first thickened portion 121 increases may entirely protrude from the outer surface of the first body portion 120. In some other embodiments, compared to the first body portion 120, the portion where the thickness of the first thickened portion 121 increases may partially protrude from the outer surface of the first body portion 120, and the other portion may protrude from the inner surface of the first body portion 120.

In the above solution, by providing a thicker and outwardly protruding first thickened portion 121 on the first wall 12 of the housing 11, on one hand, the strength of the first wall 12 can be enhanced, mitigating the problem of cracking due to impact on an unconstrained portion by the separation member 30. On the other hand, the outwardly protruding first thickened portion 121 can limit and support the separation member 30, and restrict the displacement of the separation member 30 along the second direction z, thereby ensuring the separation member 30 to be in the correct position. This reduces the risk of failure of the separation member 30, resulting in the battery 100 with higher reliability.

According to some embodiments of the present application, referring to FIG. 6, FIG. 6 is a schematic diagram of a battery cell 10 according to some embodiments of the present application.

Along a third direction y, the first wall 12 has a first side edge 123 and a second side edge 124 opposite each other, and the third direction y, the second direction z, and the first direction x are perpendicular to each other. Along the third direction y, the first thickened portion 121 extends from the first side edge 123 to the second side edge 124; or along the third direction y, the first thickened portion 121 is located between the first side edge 123 and the second side edge 124.

The third direction y is perpendicular to the second direction z, and the third direction y is also perpendicular to the first direction x. In some embodiments, the first direction x is a thickness direction of the battery cell 10, the second direction z is a height direction of the battery cell 10, and the third direction y is a width direction of the battery cell 10.

The first side edge 123 and the second side edge 124 are two opposite edges of the first wall 12 in the third direction y. "Along the third direction y, the first thickened portion 121 extends from the first side edge 123 to the second side edge 124" may be understood as that a dimension of the first thickened portion 121 in the third direction y corresponds to a dimension of the first wall 12 in the third direction y.

"Along the third direction y, the first thickened portion 121 is located between the first side edge 123 and the second side edge 124" may be understood as that a dimension of the first thickened portion 121 in the third direction y is less than a dimension of the first wall 12 in the third direction y. For example, the dimension of the first thickened portion 121 is smaller, and an end of the first thickened portion 121 has a certain distance from the first side edge 123 or the second side edge 124.

In some embodiments, one or more first thickened portions 121 may be provided, and each first thickness has a smaller dimension, thereby allowing that the plurality of first thickened portions 121 are spaced apart along the third direction y.

In the above solution, in some embodiments, by setting the first thickened portion 121 to extend from the first side edge 123 to the second side edge 124, the strength of the first wall 12 can be effectively enhanced, reducing the risk of cracking of the first wall 12 due to impact. In some other embodiments, by setting the first thickened portion 121 to be located between the first side edge 123 and the second side edge 124, the influence of the first thickened portion 121 on the weight of the first wall 12 is reduced under the condition that the first wall 12 has higher strength, thereby allowing the battery 100 to have a higher gravimetric energy density.

According to some embodiments of the present application, referring to FIG. 5, along the second direction z, the housing 11 has a first end wall 14, and the first body portion 120 is farther from the first end wall 14 than the first thickened portion 121. A maximum thickness of the first thickened portion 121 is W1, and a maximum thickness of the first end wall 14 is W2, W1 and W2 satisfying W1 ≤ W2.

In some embodiments, the first end wall 14 is a bottom wall of the housing body 111, and the bottom wall and the end cover 110 are arranged opposite each other in the second direction z. In some embodiments, the first thickened portion 121 is connected to a first end portion, which may be directly connected or indirectly connected. For example, the first thickened portion 121 is connected to a first end cover 110 at a corner, and the thickness at the corner portion is less than or equal to the thickness of the first thickened portion 121.

In some embodiments, the maximum thickness W1 of the first thickened portion 121 does not exceed the maximum thickness W2 of the first end wall 14. For example, the maximum thickness W1 of the first thickened portion 121 may be less than the maximum thickness W2 of the first end wall 14, and for another example, the maximum thickness W1 of the first thickened portion 121 may be equal to the maximum thickness W2 of the first end wall 14.

In some other embodiments, the maximum thickness W1 of the first thickened portion 121 may be greater than the maximum thickness W2 of the first end wall 14.

In the above solution, by limiting the maximum thickness W1 of the first thickened portion 121 to not greater than the maximum thickness W2 of the first end wall 14, the influence of the first thickened portion 121 on the weight of the battery cell 10 is smaller under the condition of improving the strength of the first wall 12, thereby allowing the battery 100 to have a higher gravimetric energy density.

According to some embodiments of the present application, referring to FIG. 5, the separation member 30 is located between two adjacent battery cells 10, along the first direction x, a maximum dimension by which the first thickened portion 121 protrudes from the first body portion 120 is E, and a maximum thickness of the separation member 30 is W3, E and W3 satisfying 2*E < W3.

In some embodiments, "other components" may be the battery cell 10, that is, the separation member 30 is located between two adjacent battery cells 10 and has a function of separating the two battery cells 10. Wall portions of the two battery cells 10 facing the separation member 30 may both be the first walls 12.

The first walls 12 of the two battery cells 10 may jointly restrict the displacement of the separation member 30 along the second direction z, that is, the first thickened portions 121 of the first walls 12 of the two battery cells 10 protrude toward each other.

In some embodiments, the separation member 30 may be in contact connection with the first body portion 120 of the first wall 12, thereby allowing the battery cell 10 to be closely attached to the separation member 30. For example, the separation member 30 has a function of thermal management for the battery cell 10, and by enabling the separation member 30 to closely fit with the first body portion 120, the thermal management efficiency can be improved. When the maximum thickness of the separation member 30 is W3, the spacing between two adjacent battery cells 10 may be W3.

"A maximum dimension by which the first thickened portion 121 protrudes from the first body portion 120 is E" may be understood as that a maximum dimension by which the first thickened portion 121 protrudes from a plane where an outer surface of the separation member 30 is located is E. "2*E < W3" may be understood as that the first thickened portions 121 of two adjacent battery cells 10 do not contact each other.

In the above solution, the separation member 30 is located between the first walls 12 of two battery cells 10, and by limiting the maximum dimension E by which the first thickened portion 121 protrudes from the first body portion 120 to satisfy 2*E < W3, interference between the two first thickened portions 121 can be prevented, reducing the risk of damage to the housing 11 due to mutual interference between the two first thickened portions 121, resulting in the battery 100 with higher reliability.

In some other embodiments, "other components" may be the battery cell 10, that is, the separation member 30 is located between two adjacent battery cells 10 and has a function of separating the two battery cells 10. A wall portion of one of the two battery cells 10 facing the separation member 30 may be the first wall 12, and a wall portion of the other battery cell 10 facing the separation member 30 may be a common structure, that is, a wall portion without the first thickened portion 121 provided.

According to some embodiments of the present application, referring to FIG. 5, along a direction from the first body portion 120 toward the first thickened portion 121, the thickness of the first thickened portion 121 gradually increases.

In some embodiments, the thickness of the first thickened portion 121 gradually increases rather than abruptly increases, that is, as along the direction from the first body portion 120 toward the first thickened portion 121, a wall portion of the housing body 111 gradually increases at a portion corresponding to the first thickened portion 121.

In the above solution, by setting the thickness of the first thickened portion 121 to gradually increase, the forming of the first thickened portion 121 is facilitated, the difficulty in forming the first thickened portion 121 is reduced, and the manufacturing efficiency of the battery 100 is improved.

In some other embodiments, the first thickened portion 121 and the first body portion 120 are connected to each other, and the thickness of the first thickened portion 121 abruptly increases compared to the first body portion 120.

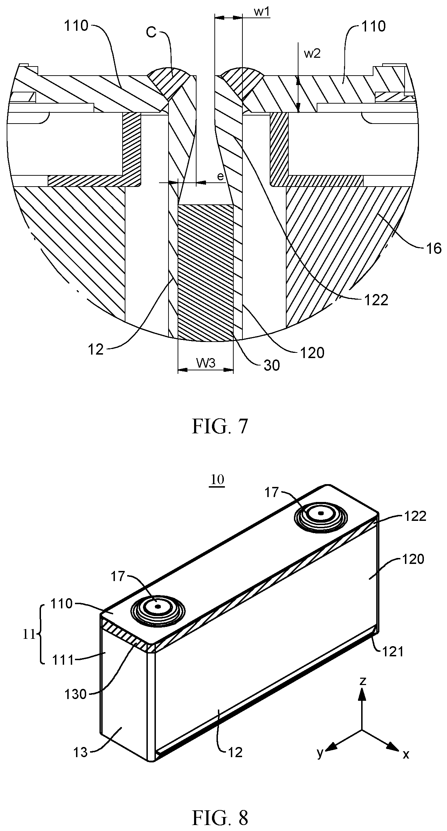

According to some embodiments of the present application, referring to FIG. 6 and FIG. 7, FIG. 7 is an enlarged view of portion B in FIG. 4.

Along the second direction z, the first wall 12 further has a second thickened portion 122, the second thickened portion 122 is located on a side of the first body portion 120 facing away from the first thickened portion 121, and a thickness of the second thickened portion 122 is greater than the thickness of the first body portion 120.

The second thickened portion 122 is a portion of the first wall 12, along the second direction z, the second thickened portion 122, the first body portion 120, and the first thickened portion 121 may be arranged with each other. The thickness of the second thickened portion 122 may be greater than the thickness of the first body portion 120. The thickness of the second thickened portion 122 may be equal to, less than, or greater than the thickness of the first thickened portion 121.

In some embodiments, compared to the first body portion 120, the portion where the thickness of the second thickened portion 122 increases may entirely protrude from the outer surface of the first body portion 120. In some other embodiments, compared to the first body portion 120, the portion where the thickness of the second thickened portion 122 increases may partially protrude from the outer surface of the first body portion 120, and the other portion may protrude from the inner surface of the first body portion 120. In some other embodiments, compared to the first body portion 120, the portion where the thickness of the second thickened portion 122 increases may entirely protrude from the inner surface of the first body portion 120.

In some embodiments, referring to FIG. 7, the second thickened portion 122 may be above the separation member 30. In some other embodiments, along the first direction x, a projection of the separation member 30 on the first wall 12 may at least partially overlap with the second thickened portion 122.

In the above solution, by providing the second thickened portion 122 on the side of the first body portion 120 facing away from the first thickened portion 121, the overall strength of the first wall 12 can be effectively enhanced. This enhances the impact resistance of the first wall 12, effectively reducing the risk of cracking of the housing 11 due to impact, resulting in the battery 100 with higher reliability.

According to some embodiments of the present application, referring to FIG. 6, along the third direction y, the first wall 12 has the first side edge 123 and the second side edge 124 opposite each other, and the third direction y, the second direction z, and the first direction x are perpendicular to each other. Along the third direction y, the second thickened portion 122 extends from the first side edge 123 to the second side edge 124; or along the third direction y, the second thickened portion 122 is located between the first side edge 123 and the second side edge 124.

The third direction y is perpendicular to the second direction z, and the third direction y is also perpendicular to the first direction x. In some embodiments, the first direction x is the thickness direction of the battery cell 10, the second direction z is the height direction of the battery cell 10, and the third direction y is the width direction of the battery cell 10.

The first side edge 123 and the second side edge 124 are two opposite edges of the first wall 12 in the third direction y. "Along the third direction y, the second thickened portion 122 extends from the first side edge 123 to the second side edge 124" may be understood as that a dimension of the second thickened portion 122 in the third direction y corresponds to a dimension of the first wall 12 in the third direction y.

"Along the third direction y, the second thickened portion 122 is located between the first side edge 123 and the second side edge 124" may be understood as that a dimension of the second thickened portion 122 in the third direction y is less than a dimension of the first wall 12 in the third direction y. For example, the dimension of the second thickened portion 122 is smaller, and an end of the second thickened portion 122 has a certain distance from the first side edge 123 or the second side edge 124.

In some embodiments, one or more second thickened portions 122 may be provided, and each second thickness has a smaller dimension, thereby allowing that the plurality of second thickened portions 122 are spaced apart along the third direction y.

In the above solution, in some embodiments, by setting the second thickened portion 122 to extend from the first side edge 123 to the second side edge 124, the strength of the first wall 12 can be effectively enhanced, reducing the risk of cracking of the first wall 12 due to impact. In some other embodiments, by setting the second thickened portion 122 to be located between the first side edge 123 and the second side edge 124, the influence of the second thickened portion 122 on the weight of the first wall 12 is reduced under the condition of improving the strength of the first wall 12, thereby allowing the battery 100 to have a higher gravimetric energy density.

According to some embodiments of the present application, referring to FIG. 7, along a direction from the first body portion 120 toward the second thickened portion 122, the thickness of the second thickened portion 122 gradually increases.

In some embodiments, the thickness of the second thickened portion 122 gradually increases rather than abruptly increases, that is, as along the direction from the first body portion 120 toward the second thickened portion 122, the wall portion of the housing body 111 gradually increases at a portion corresponding to the second thickened portion 122.

In the above solution, by setting the thickness of the second thickened portion 122 to gradually increase, the forming of the second thickened portion 122 is facilitated, the difficulty in forming the second thickened portion 122 is reduced, and the manufacturing efficiency of the battery 100 is improved.

According to some embodiments of the present application, referring to FIG. 6 and FIG. 7, the housing 11 includes an end cover 110 and a housing body 111, and the housing body 111 has the first wall 12. Along the second direction z, the housing body 111 has an opening, the first body portion 120 is farther from the opening than the second thickened portion 122, and the end cover 110 is welded to the first wall 12 and seals the opening.

The first wall 12 is a partial structure of the housing body 111. In some embodiments, the housing body 111 can include a peripheral wall and a bottom wall, the peripheral wall is enclosed at an edge of the bottom wall and forms an opening. The end cover 110 is connected to the peripheral wall and seals the opening. The peripheral wall includes a plurality of side walls connected to each other, and the first wall 12 is one of the plurality of side walls connected to each other. In some embodiments, the peripheral wall and the bottom wall may be integrally formed. In some other embodiments, the peripheral wall and the bottom wall may be connected by welding.

In some embodiments, the second thickened portion 122 is a part of the structure forming the opening, that is, an edge of the second thickened portion 122 away from the first body portion 120 is an edge of the opening.

In some other embodiments, the second thickened portion 122 is closer to the opening than the first body portion 120; however, the edge of the second thickened portion 122 away from the first body portion 120 is not the edge of the opening. For example, the first wall 12 further includes an opening portion, the opening portion is connected to the second thickened portion 122, and the opening portion forms a part of the opening.

"The end cover 110 is welded to the first wall 12" may mean that the end cover 110 and the first wall 12 are connected by welding. For example, referring to FIG. 7, in FIG. 7, reference numeral C shows a weld mark formed by welding the end cover 110 and the first wall 12.

In the above solution, the opening of the housing body 111 is sealed by the end cover 110, enabling the electrode assembly 16 and the electrolyte of the battery 100 to be in an enclosed space, reducing the influence of external substances, resulting in the battery 100 with higher reliability. To improve the manufacturing efficiency of the battery 100, the end cover 110 can be connected to the housing 11 by welding. However, after the end cover 110 and the housing body 111 are welded, a heat-affected zone that reduces the strength of the housing body 111 is often formed below the weld pool. To this end, by providing the second thickened portion 122 to compensate for the strength of the heat-affected zone, ensuring higher strength of the housing body 111 and the end cover 110 after welding, reducing or mitigating the risk of cracking and failure at the welding position of the end cover 110 and the housing body 111, thereby improving the reliability of the battery 100.

According to some embodiments of the present application, referring to FIG. 7, a maximum thickness of the second thickened portion 122 is w1, and a thickness of the end cover 110 is w2, w1 and w2 satisfying w1 ≤ w2.

In some embodiments, the maximum thickness w1 of the second thickened portion 122 does not exceed the maximum thickness w2 of the end cover 110. For example, the maximum thickness w1 of the second thickened portion 122 may be less than the maximum thickness w2 of the end cover 110, and for another example, the maximum thickness w1 of the second thickened portion 122 may be equal to the maximum thickness w2 of the end cover 110.

In some other embodiments, the maximum thickness w1 of the second thickened portion 122 may be greater than the maximum thickness w2 of the end cover 110.

In the above solution, by limiting the maximum thickness w1 of the second thickened portion 122 to not greater than the maximum thickness w2 of the end cover 110, the influence of the second thickened portion 122 on the weight of the battery cell 10 is smaller under the condition of improving the strength of the first wall 12, thereby allowing the battery 100 to have a higher gravimetric energy density.

According to some other embodiments of the present application, referring to FIG. 8, FIG. 8 is a schematic diagram of a battery cell 10 according to some other embodiments of the present application. Along the third direction y, the housing 11 further has a second wall 13, the second wall 13 is adjacent to the first wall 12, an area of a surface of the first wall 12 is greater than an area of a surface of the second wall 13, and the third direction y, the second direction z, and the first direction x are perpendicular to each other. The second wall 13 has a second body portion and a third thickened portion 130 arranged along the second direction z, and the second body portion is farther from the opening than the third thickened portion 130.

The third direction y is perpendicular to the second direction z, and the third direction y is also perpendicular to the first direction x. In some embodiments, the first direction x is the thickness direction of the battery cell 10, the second direction z is the height direction of the battery cell 10, and the third direction y is the width direction of the battery cell 10.

In some embodiments, the housing 11 includes a housing body 111, the housing body 111 has a peripheral wall, the peripheral wall includes two first walls 12 opposite each other along the first direction x, and two second walls 13 opposite each other along the third direction y, where the first wall 12 is adjacent to the second wall 13, and an area of a surface of the first wall 12 is greater than an area of the second wall 13.

The second body portion and the third thickened portion 130 are both parts of the second wall 13, and a thickness of the second body portion is less than a thickness of the third thickened portion 130.

"The second body portion is farther from the opening than the third thickened portion 130" may be understood as that the third thickened portion 130 is a part of the structure forming the opening of the housing body 111, that is, an edge of the third thickened portion 130 away from the second body portion is an edge of the opening. Alternatively, this may be understood as that the third thickened portion 130 is closer to the opening than the second body portion; however, an edge of the third thickened portion 130 away from the second body portion is not an edge of the opening. For example, the second wall 13 further includes an opening portion, the opening portion is connected to the third thickened portion 130, and the opening portion forms a part of the opening.

In the above solution, by providing the third thickened portion 130 on the second wall 13 at a portion corresponding to the opening of the housing body 111, the third thickened portion 130 cooperates with the second thickened portion 122 to enhance the strength of the housing body 111, and reduce the risk of cracking of the housing body 111 due to impact, thereby improving the reliability of the battery 100.

According to some other embodiments of the present application, referring to FIG. 8, the housing body 111 includes two first walls 12 opposite each other along the first direction x, and two second walls 13 opposite each other along the third direction y, and the first wall 12 and the second wall 13 are connected to each other and jointly enclose an opening. Along a circumferential direction of the housing body 111, the second thickened portion 122 and the third thickened portion 130 are connected to each other.

The housing body 111 can be square, and the peripheral wall of the housing body 111 includes two first walls 12 and two second walls 13, the two first walls 12 are arranged opposite each other along the first direction x, and the two second walls 13 are arranged opposite each other along the third direction y. The two first walls 12 and the two second walls 13 are connected to each other and enclosed at a bottom wall of the housing body 111, and end walls of the two first walls 12 and the two second walls 13 away from the bottom wall jointly enclose the opening.

"Along a circumferential direction of the housing body 111, the second thickened portion 122 and the third thickened portion 130 are connected to each other" may be understood as that the thickened portions of the peripheral wall of the housing body 111 are provided around one circle of the opening.

In the above solution, by setting a thickened region around the entire perimeter of the housing body 111 corresponding to the opening, the strength of the housing body 111 can be effectively enhanced, reducing the risk of cracking of the housing body 111, thereby improving the reliability of the battery 100.

According to some embodiments of the present application, referring to FIG. 4 and FIG. 7, along the first direction x, the second thickened portion 122 protrudes toward the separation member 30 relative to the first body portion 120, the first thickened portion 121, the first body portion 120, and the second thickened portion 122 jointly form a limiting groove 15, and the separation member 30 is located in the limiting groove 15.

"Along the first direction x, the second thickened portion 122 protrudes toward the separation member 30 relative to the first body portion 120" may be understood as that the second thickened portion 122 may protrude from an outer surface of the first body portion 120. When the separation member 30 is in a state of contacting the first body portion 120 and the separation member 30 has a tendency to displace along the second direction z due to an external force, the displacement of the separation member 30 may be restricted due to the outward protrusion of the second thickened portion 122.

Referring to FIG. 4, the first thickened portion 121, the first body portion 120, and the second thickened portion 122 respectively outwardly protrude from the outer surface of the first body portion 120 to form the limiting groove 15, and the separation member 30 may be located in the limiting groove 15 during assembly, enabling the first thickened portion 121 and the second thickened portion 122 to respectively limit the separation member 30 on two sides of the separation member 30.

In the above solution, by setting the second thickened portion 122 to protrude toward the separation member 30 relative to the first body portion 120, on one hand, the strength of the first wall 12 can be enhanced, mitigating the problem of cracking due to impact on an unconstrained portion by the separation member 30. On the other hand, a limiting function is achieved, allowing the second thickened portion 122 and the first thickened portion 121 to jointly form a limiting groove 15, restricting the displacement of the separation member 30 along the second direction z, thereby ensuring the separation member 30 to be in the correct position. This reduces the risk of failure of the separation member 30, resulting in the battery 100 with higher reliability.

According to some embodiments of the present application, referring to FIG. 7, the separation member 30 is located between two adjacent battery cells 10, and along the first direction x, a maximum dimension by which the second thickened portion 122 protrudes from the first body portion 120 is e, and a maximum thickness of the separation member 30 is W3, e and W3 satisfying 2*e < W3.

In some embodiments, "other components" may be the battery cell 10, that is, the separation member 30 is located between two adjacent battery cells 10 and has a function of separating the two battery cells 10. Wall portions of the two battery cells 10 facing the separation member 30 may both be the first walls 12.

The first walls 12 of the two battery cells 10 can jointly restrict the displacement of the separation member 30 along the second direction z, that is, the second thickened portions 122 of the first walls 12 of the two battery cells 10 protrude toward each other.

In some embodiments, the separation member 30 may be in contact connection with the first body portion 120 of the first wall 12, thereby allowing the battery cell 10 to be closely attached to the separation member 30. For example, the separation member 30 has a function of thermal management for the battery cell 10, and by enabling the separation member 30 to closely fit with the first body portion 120, the thermal management efficiency can be improved. When the maximum thickness of the separation member 30 is W3, the spacing between two adjacent battery cells 10 may be W3.

"A maximum dimension by which the second thickened portion 122 protrudes from the first body portion 120 is e" may be understood as that a maximum dimension by which the second thickened portion 122 protrudes from a plane where an outer surface of the separation member 30 is located is e. "2*e < W3" may be understood as that the second thickened portions 122 of two adjacent battery cells 10 do not contact each other.

In the above solution, the separation member 30 having a maximum thickness of W3 is located between the first walls 12 of two battery cells 10, and by limiting the maximum dimension e by which the second thickened portion 122 protrudes from the first body portion 120 to satisfy 2*e < W3, interference between the two second thickened portions 122 can be prevented, reducing the risk of damage to the first wall 12 due to mutual interference between the two second thickened portions 122, resulting in the battery 100 with higher reliability.

According to some embodiments of the present application, the housing 11 includes a cover and a housing body, and the first wall 12 is at least part of the cover; and the housing body is formed with an opening, and the cover is connected to the housing body and seals the opening.

In some embodiments, the housing 11 may be composed of the housing body and the cover, the housing body may be a member formed with an opening in the first direction x, and the cover is a member connected to the housing body and capable of sealing the opening.

In some embodiments, the first wall 12 may be the cover, and in some other embodiments, the first wall 12 may be a part of the cover.

For example, the housing 11 may be a multi-edged structure, the housing may have a top wall and a bottom wall opposite each other, a first side wall, a second side wall, a third side wall, and a fourth side wall, where the top wall, the bottom wall, the second side wall, the third side wall, and the fourth side wall enclose the housing body, the first side wall is the cover, and the cover may be connected to the housing body by adhesion, welding, or threaded connection. In these embodiments, the cover may be a side wall of the housing with a smaller area or a side wall with a larger area.

In the above solution, a design of a housing is provided, the housing 11 may include a cover and a housing body, and the connection of the cover and the housing body enables the electrode assembly 16 to be provided in an enclosed space, and at the same time, by providing the first thickened portion 121 on the cover, the strength of the cover can be enhanced and the displacement of the separation member 30 can be restricted, resulting in the battery with higher reliability.

According to some embodiments of the present application, the separation member 30 includes a thermal management component configured to regulate the temperature of the battery cell 10.

The thermal management component may be a member configured to regulate the temperature of the battery cell 10. For example, referring to FIG. 3, the thermal management component is plate-like and may be a water-cooling plate. In some embodiments, the thermal management component internally accommodates a medium, and the medium may exchange heat with the battery cell 10 to achieve cooling and heating of the battery cell 10. The medium may be a fluid, such as a flowing gas, liquid, or gas-liquid mixture. In some embodiments, the thermal management component may directly regulate the temperature of the battery cell 10. For example, the thermal management component may be an electric heating member.

In the above solution, the separation member 30 may include a thermal management component, and while separating the battery cells 10, the thermal management component can also facilitate heat exchange with the battery cell 10 through the medium inside the thermal management component, so that the battery 100 is at a suitable temperature, thereby allowing the battery 100 to have better performance.

According to some embodiments of the present application, an electric apparatus is provided, including the battery 100 according to any one of the above, where the battery 100 is configured to supply electrical energy.

According to some embodiments of the present application, a battery 100 is provided, referring to FIG. 3 to FIG. 7.

The battery 100 includes a battery cell 10 and a separation member 30. Along a first direction x, the separation member 30 is provided on one side of the battery cell 10, and the separation member 30 is configured to separate the battery cell 10 from other components adjacent to the battery cell 10. For example, the other components may be the battery cell 10, and the separation member 30 may be a water-cooling plate. As shown in FIG. 3, the separation member 30 is located between two adjacent battery cells 10.

The battery cell 10 has a housing 11, and the housing 11 includes a housing body 111 and an end cover 110. Along the first direction x, the housing body 111 includes two first walls 12 opposite each other. Along a third direction y, the housing body 111 includes two second walls 13 opposite each other. Along a second direction z, the housing body 111 has a bottom wall, the two first walls 12 and the two second walls 13 are enclosed at an edge of the bottom wall and jointly form an opening, and the housing body 111 is connected to end portions of the first wall 12 and the second wall 13 away from the bottom wall and seals the opening. The housing body 111 may be welded to the first wall 12 and the second wall 13. The first direction x, the second direction z, and the third direction y are perpendicular to each other.

Along the second direction z, the first wall 12 includes a first thickened portion 121, a first body portion 120, and a second thickened portion 122 that are arranged with each other. Along the second direction z, the first body portion 120 is farther from the bottom wall than the first thickened portion 121, and a first body is farther from the end cover 110 than the second thickened portion 122. A thickness of the first thickened portion 121 is greater than a thickness of the first body portion 120, and a thickness of a person thickened portion is greater than a thickness of the first body portion 120.

By providing the first thickened portion 121 and the second thickened portion 122 with larger thicknesses, the strength of the first wall 12 can be enhanced, reducing the risk of cracking of the first wall 12 due to impact.

Along the second direction z, the first thickened portion 121 is located on one side of the separation member 30, and the second thickened portion 122 is located on the other side of the separation member 30. The outwardly protruding first thickened portion 121 and second thickened portion 122 can restrict the displacement of the separation member 30 along the second direction z, thereby ensuring the separation member 30 to be in the correct position. This reduces the risk of separation failure. For example, the second direction z is parallel to a gravity direction, a direction from the first body portion 120 toward the first thickened portion 121 is the gravity direction, and the first thickened portion 121 is below the separation member 30. When the battery 100 is impacted and the separation member 30 is forced to have a tendency to displace along the gravity direction, the first thickened portion 121 can restrict the displacement of the separation member 30, thereby reducing the risk of failure of the separation member 30, and allowing the battery 100 with higher reliability.

The foregoing descriptions are merely preferred embodiments of the present application which are not intended to limit the present application. Persons skilled in the art understand that the present application may have various modifications and variations. Any modifications, equivalent replacements, and improvements made without departing from the spirit and principle of the present application shall fall within the protection scope of the present application.

## Claims

1. A battery, comprising:
a battery cell, having a housing; and
a separation member, along a first direction, the separation member being provided on one side of the battery cell, and the separation member being configured to separate the battery cell from other components adjacent to the battery cell; wherein
along the first direction, the housing has a first wall facing the separation member, the first wall has a first body portion and a first thickened portion arranged along a second direction, a thickness of the first thickened portion is greater than a thickness of the first body portion, and the first direction and the second direction are perpendicular to each other; and along the second direction, the first thickened portion is located on one side of the separation member, and along the first direction, the first thickened portion protrudes toward the separation member relative to the first body portion and is configured to restrict the displacement of the separation member along the second direction.

2. The battery according to claim 1, wherein
along a third direction, the first wall has a first side edge and a second side edge opposite each other, and the third direction, the second direction, and the first direction are perpendicular to each other; and
along the third direction, the first thickened portion extends from the first side edge to the second side edge; or along the third direction, the first thickened portion is located between the first side edge and the second side edge.

3. The battery according to claim 1 or 2, wherein
along the second direction, the housing has a first end wall, and the first body portion is farther from the first end wall than the first thickened portion; and
a maximum thickness of the first thickened portion is W1, and a maximum thickness of the first end wall is W2, W1 and W2 satisfying W1 ≤ W2.

4. The battery according to any one of claims 1 to 3, wherein
the separation member is located between two adjacent battery cells, and along the first direction, a maximum dimension by which the first thickened portion protrudes from the first body portion is E, and a maximum thickness of the separation member is W3, E and W3 satisfying 2*E < W3.

5. The battery according to any one of claims 1 to 4, wherein
along a direction from the first body portion toward the first thickened portion, the thickness of the first thickened portion gradually increases.

6. The battery according to any one of claims 1 to 5, wherein
along the second direction, the first wall further has a second thickened portion, the second thickened portion is located on a side of the first body portion facing away from the first thickened portion, and a thickness of the second thickened portion is greater than the thickness of the first body portion.

7. The battery according to claim 6, wherein
along the third direction, the first wall has the first side edge and the second side edge opposite each other, and the third direction, the second direction, and the first direction are perpendicular to each other; and
along the third direction, the second thickened portion extends from the first side edge to the second side edge; or along the third direction, the second thickened portion is located between the first side edge and the second side edge.

8. The battery according to claim 6 or 7, wherein
along a direction from the first body portion toward the second thickened portion, the thickness of the second thickened portion gradually increases.

9. The battery according to any one of claims 6 to 8, wherein
the housing includes an end cover and a housing body, and the housing body has the first wall; and
along the second direction, the housing body has an opening, the first body portion is farther from the opening than the second thickened portion, and the end cover is welded to the first wall and seals the opening.

10. The battery according to claim 9, wherein
a maximum thickness of the second thickened portion is w1, and a thickness of the end cover is w2, w1 and w2 satisfying w1 ≤ w2.

11. The battery according to claim 9 or 10, wherein
along the third direction, the housing further has a second wall, the second wall is adjacent to the first wall, an area of a surface of the first wall is greater than an area of a surface of the second wall, and the third direction, the second direction, and the first direction are perpendicular to each other; and
the second wall has a second body portion and a third thickened portion arranged along the second direction, and the second body portion is farther from the opening than the third thickened portion.

12. The battery according to claim 11, wherein
the housing body includes two first walls opposite each other along the first direction and two second walls opposite each other along the third direction, and the first wall and the second wall are connected to each other and jointly enclose the opening; and
along a circumferential direction of the housing body, the second thickened portion and the third thickened portion are connected to each other.

13. The battery according to any one of claims 6 to 12, wherein
along the first direction, the second thickened portion protrudes toward the separation member relative to the first body portion, the first thickened portion, the first body portion, and the second thickened portion jointly form a limiting groove, and the separation member is located in the limiting groove.

14. The battery according to claim 13, wherein
the separation member is located between two adjacent battery cells, and along the first direction, a maximum dimension by which the second thickened portion protrudes from the first body portion is e, and a maximum thickness of the separation member is W3, e and W3 satisfying 2*e < W3.

15. The battery according to any one of claims 1 to 14, wherein
the housing includes a cover and a housing body, and the first wall is at least part of the cover; and
the housing body is formed with an opening, and the cover is connected to the housing body and seals the opening.

16. The battery according to any one of claims 1 to 15, wherein
the separation member includes a thermal management component configured to regulate the temperature of the battery cell.

17. An electric apparatus comprising the battery according to any one of claims 1 to 16, wherein the battery is configured to supply electrical energy.
